# EUROPÄISCHE PATENTSCHRIFT

(11) **EP 0 665 766 B1**
(45) Veröffentlichungstag und Bekanntmachung des Hinweises auf die Patenterteilung: **23.10.1996**
(21) Anmeldenummer: 94922786.2
(22) Anmeldetag: 02.08.1994
(51) Int. Cl.: B01D 61/24, D01F 13/02

(54) **VERFAHREN ZUR REINIGUNG WÄSSERIGER LÖSUNGEN VON AMINOXIDEN**
METHOD OF PURIFYING AQUEOUS SOLUTIONS OF AMINE OXIDES
PROCEDE D'EPURATION DE SOLUTIONS AQUEUSES D'OXYDES D'AMINES

(30) Priorität: 26.08.1993 AT 1718/93
(43) Veröffentlichungstag der Anmeldung: 09.08.1995
(73) Patentinhaber: LENZING AKTIENGESELLSCHAFT, 4860 Lenzing (AT)
(72) Erfinder: MÄNNER, Johann, A-4852 Weyregg 145 (AT); FIRGO, Heinrich, A-4840 Vöcklabruck (AT); KALT, Wolfram, A-4860 Lenzing (AT); RICHARDT, Werner, A-4864 Attersee (AT)
(74) Vertreter: Schwarz, Albin, Dr. Kopecky & Schwarz Patentanwälte
(86) Internationale Anmeldenummer: AT9400105
(87) Internationale Veröffentlichungsnummer: WO9505888

(56) Entgegenhaltungen:
- EP-A- 0 378 081
- EP-A- 0 427 701
- WO-A-93/11287
- US-A- 3 132 095
- US-A- 3 165 415
- US-A- 3 454 490
- US-A- 4 306 946
- US-A- 4 769 152
- 'Ullmann's Encyclopedia of Industrial Chemistry' 1991 , VCH VERLAG , WEINHEIM, DE Band A16 siehe Seite 213, Spalte 2, Zeile 7 - Zeile 12
- SIMPSON C.F. 'Techniques in Liquid Chromatography' 1982 , WILEY & SONS , CHICHESTER, GB siehe Seite 249, Absatz 3 siehe Seite 283, Absatz 2 siehe Seite 321

## Beschreibung

Die Erfindung betrifft ein Verfahren zur Reinigung wässeriger Lösungen von Aminoxiden, insbesondere gebrauchter Spinnbadlösung.

Bei der Herstellung von Lösungen von Cellulose in tertiären Aminoxiden werden bekanntermaßen Abbaureaktionen der Cellulose und des Aminoxides ausgelöst. Das am häufigsten verwendete Lösungsmittel ist N-Methylmorpholin-N-oxid (NMMO). Dieses Lösungsmittel wird als eine Alternative zum Viskoseverfahren untersucht und bietet den Vorteil, daß dieses Lösungsmittel in einem geschlossenen Kreislauf geführt werden kann.

Durch die Abbaureaktionen entstehen verschiedene Produkte, die sich bei der Kreislaufführung des NMMO-Verfahrens (NMMO soll im folgenden allgemein für tertiäre Aminoxide stehen) anreichern und den Prozeß zunehmend stören. Eine besonders problematische Substanzklasse stellen niedere Carbonsäuren dar, wie z.B. die Ameisensäure.

Die Reinigung von wässerigen Lösungen von tertiären Aminoxiden mittels Anionenaustauschen ist beschrieben in WO-A- 93 11 287. Weiterhin ist aus Ullmann's Encyclopedia of Industrial Chemistry, Band A16, Seite 213 (1991) ein Dialyseverfahren bekannt, wobei Anionen über eine anionaktive Membran gegen Hydroxylionen ausgetauscht werden. Insbesondere wird die Entfernung von Zitratanionen aus Fruchtsäften erwähnt.

Um in einem geschlossenen Lösungsmittelkreislauf eine gleichbleibende Qualität der Einsatzstoffe zu gewährleisten, ist es notwendig, die im Prozeß gebildeten Abbau- bzw. Problemsubstanzen kontinuierlich aus dem Lösungsmittelzyklus zu entfernen. Die Erfindung stellt sich die Aufgabe, ein Verfahren zur Reinigung wässeriger Lösungen von tertiären Aminoxiden, insbesondere von Spinnbadflüssigkeiten aus dem NMMO-Verfahren, zur Verfügung zu stellen, bei dem insbesondere Anionen von Carbonsäuren und von anorganischen Säuren effizient entfernt werden sollen. Für diese Stoffe existiert bis heute kein effizientes Abtrennungsverfahren.

Das erfindungsgemäße Verfahren zur Reinigung wässeriger Lösungen von tertiären Aminoxiden, welche Lösungen als Verunreinigungen Anionen von Carbonsäuren und von anorganischen Säuren enthalten, ist dadurch gekennzeichnet, daß die Lösungen über eine anionaktive Membran mit einer wässerigen Reinigungslösung eines Alkalihydroxides und/oder Ionenpaarreagens in Kontakt gebracht werden.

Es hat sich gezeigt, daß auf diese Weise Carbonsäureanionen und Anionen anorganischer Säuren besonders effizient aus wässerigen Lösungen tertiärer Aminoxide entfernt bzw. gegen OH⁻-Ionen ausgetauscht werden.

Als besonders zweckmäßig hat sich erwiesen, wenn die zu reinigende Lösung im Gegenstrom zur Reinigungslösung des Alkalihydroxides und/oder Ionenpaarreagens geführt wird.

Als bevorzugt sind in der Reinigungslösung pro Liter zwischen 0,01 und 1,0 Mol NaOH oder Tetrabutylammoniumnydroxid enthalten.

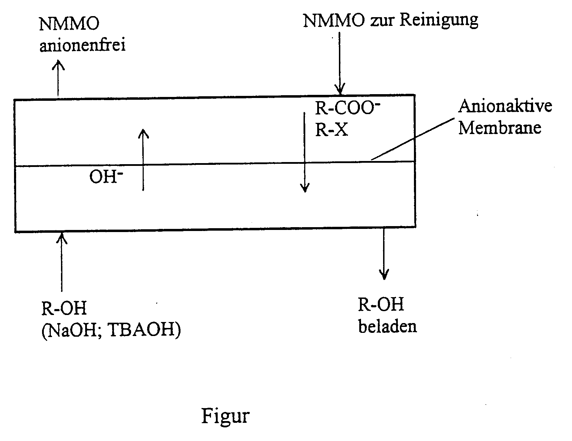

Mit den nachfolgenden Beispielen und an Hand der Zeichnung wird eine Ausführungsform der Erfindung noch näher erläutert.

Die Zeichnung zeigt schematisch eine Zelle, die mittels einer anionaktiven Membran in zwei Räume geteilt ist. Im in der Fig. gezeigten oberen Raum wird an einem Ende die zu reinigende NMMO-Lösung eingeführt, streicht die Membran entlang und wird gereinigt am anderen Ende abgezogen. Im unteren Raum wird im Gegenstrom dazu die Reinigungsflüssigkeit geführt. Die Pfeile geben Transportrichtung der Flüssigkeiten und die Wanderung der Ionen an.

Mit Hilfe dieser schematisch gezeigten Zelle wurden verschiedene NMMO-Lösungen, welche mit Formiat, Cl⁻, NO₂⁻, NO₃⁻, PO₄³⁻, SO₄²⁻und/oder Oxalat verunreinigt waren, gereinigt. Als Reinigungsmedium (R-OH⁻) wurde eine wässerige NaOH-Lösung verwendet, wobei 1000 ml NMMO-Lösung mit insgesamt 6000 ml NaOH (0,7 ml/min) gereinigt wurden. Die Natronlauge wurde im Kreis geführt. Die Versuche liefen ca. 24 Stunden. Die Ergebnisse sind nachfolgend angegeben.

| Versuch 1: NMMO-Lösung (Reinigung mit TBAOH; 0,1 Mol/l)) | | | | | | | | |
|---|---|---|---|---|---|---|---|---|
| ppm | NMMO | Formiat | Cl⁻ | NO₂⁻ | NO₃⁻ | PO₄³⁻ | SO₄²⁻ | Oxalat |
| vor Reinigung | 10,17% | 131,0 | 0 | 3 | 12 | 12 | 0 | 2 |
| nach Reinigung | 9,91% | 1,4 | 0 | 0 | 0,4 | 0 | 0 | 0 |
| Formiatreduktion = 99% (Formiat = Anion der Ameisensäure) | | | | | | | | |

| Versuch 2: NMMO-Lösung (Reinigung mit NaOH; 0,1 Mol/l) | | | | | | | | |
|---|---|---|---|---|---|---|---|---|
| ppm | NMMO | Formiat | Cl⁻ | NO₂⁻ | NO₃⁻ | PO₄³⁻ | SO₄²⁻ | Oxalat |
| vor Reinigung | 10,17% | 131,0 | 0 | 3 | 12 | 12 | 0 | 2 |
| nach Reinigung | 9,94% | 1,5 | 0 | 0 | 0,1 | 0 | 0 | 0 |
| Formiatreduktion = 99% | | | | | | | | |

| Versuch 3: NMMO-Lösung (Reinigung mit NaOH; 0,1 Mol/l) | | | | | | | | |
|---|---|---|---|---|---|---|---|---|
| ppm | NMMO | Formiat | Cl⁻ | NO₂⁻ | NO₃⁻ | PO₄³⁻ | SO₄²⁻ | Oxalat |
| vor Reinigung | 10,02% | 198 | 66,0 | 0 | 1,5 | 0 | 29,3 | 3,2 |
| nach Reinigung | 9,12% | 4 | 0,2 | 0 | 0,5 | 0 | 0,4 | 0 |
| Formiatreduktion = 98% | | | | | | | | |

| Versuch 4: NMMO-Lösung (Reinigung mit NaOH; 0,1 Mol/l) | | | | | | | | |
|---|---|---|---|---|---|---|---|---|
| ppm | NMMO | Formiat | Cl⁻ | NO₂⁻ | NO₃⁻ | PO₄³⁻ | SO₄²⁻ | Oxalat |
| vor Reinigung | 9,95% | 126,0 | 6,7 | 6,2 | 12,3 | 19,3 | 1,1 | 2,5 |
| nach Reinigung | 10,20% | 7,0 | 0,5 | 0,4 | 0,2 | 0 | 1,8 | 0,5 |
| Formiatreduktion = 95% | | | | | | | | |

In den Tabellen ist die Konzentration aller Säureanionen in ppm angegeben. TBAOH = Tetrabutylammoniumhydroxid

## Patentansprüche

1. Verfahren zur Reinigung wässeriger Lösungen von tertiären Aminoxiden, welche Lösungen als Verunreinigungen Anionen von Carbonsäuren und von anorganischen Säuren enthalten, dadurch gekennzeichnet, daß die Lösungen über eine anionaktive Membran mit einer wässerigen Reinigungslösung eines Alkalihydroxides und/oder Ionenpaarreagens in Kontakt gebracht werden.

2. Verfahren nach Anspruch 1, dadurch gekennzeichnet, daß die zu reinigende Lösung im Gegenstrom zur Reinigungslösung des Alkalihydroxides und/oder Ionenpaarreagens geführt wird.

3. Verfahren nach einem der Ansprüche 1 oder 2, dadurch gekennzeichnet, daß die Reinigungslösung pro Liter zwischen 0,01 und 1,0 Mol NaOH oder Tetrabutylammoniumhydroxid enthält.

## Claims

1. A process for the purification of aqueous solutions of tertiary amine-oxides, said solutions containing anions of carboxylic acids and of inorganic acids as impurities, characterized in that said solutions are contacted with an aqueous purification solution of an alkali hydroxide and/or ion pair reagent by means of an anion active membrane.

2. A process according to Claim 1, characterized in that said solution to be purified is conducted in counterflow to said purification solution of the alkali hydroxide and/or ion pair reagent.

3. A process according to one of the Claims 1 or 2, characterized in that said purification liquid contains of from 0,01 to 1,0 mole of NaOH or tetrabutylammonium hydroxide per litre.

## Revendications

1. Procédé pour la purification de solutions aqueuses d'oxydes aminés tertiaires, lesquelles solutions contiennent des anions d'acides carboxyliques et d'acides inorganiques en tant qu'impuretés, caractérisé en ce que lesdites solutions, par l'intermédiaire d'un diaphragm actif anionique, sont mises en contact avec une solution de purification aqueuse d'un hydroxyde alcalin et/ou d'un réactif d'une paire d'ions.

2. Procédé selon la revendication 1, caractérisé en ce que la solution à purifier est conduite en contre-courant à la solution de purification de l'hydroxyde alcalin et/ou du réactif d'une paire d'ions.

3. Procédé selon l'une quelconque des revendications 1 ou 2, caractérisé en ce que la solution de purification contient entre 0,01 et 1,0 mol par litre de NaOH ou d'hydroxyde d'ammoniumtétrabutyl.
